# EUROPEAN PATENT APPLICATION

(11) **EP 3 477 463 A1**
(43) Date of publication of application: **01.05.2019**
(21) Application number: 18202962.9
(22) Date of filing: 26.10.2018
(51) Int. Cl.: G06F 3/06

(54) **METHOD AND SYSTEM FOR USING WEAR-LEVELING USING A MULTI-GAP PROGRESS FIELD**

(30) Priority: 31.10.2017 US 201715799225
(71) Applicant: EMC IP Holding Company LLC, Hopkinton, MA 01748 (US)
(72) Inventor: VAN GAASBECK, Richard H., Hopkinton, MA 01748 (US)
(74) Representative: Robson, Aidan John

(57) **Abstract**

A data storage device includes a persistent storage and a processor. The persistent storage stores data. The processor obtains a data access request for the data stored in the persistent storage, obtains a portion of the data from the persistent storage using a global migration progress index, and provides the obtained portion of the data in response to the data access request.

## Description

### BACKGROUND

Solid state memory storage devices may be used to store data. Such solid state storage devices may be based on solid state memory such as, for example, Phase Change Memory (PCM), Spin Torque Magnetic Random Access Memory, that degrades as data are written to the memory. Only a limited number of writes to solid state memory may thus be permissible before the solid state memory loses its ability to reliably retain data. As such, even with perfect wear leveling, it may become necessary for a solid state memory storage device to migrate data from one region of storage to another fresh region of storage, while a user workload is in progress.

### SUMMARY

In one aspect, a data storage device in accordance with one or more embodiments of the invention includes a persistent storage and a processor. The persistent storage stores data. The processor obtains a data access request for the data stored in the persistent storage, obtains a portion of the data from the persistent storage using a global migration progress index, and provides the obtained portion of the data in response to the data access request.

In one aspect, a method for operating a data storage device in accordance with one or more embodiments of the invention includes obtaining a data access request for the data stored in the persistent storage, obtaining a portion of the data from the persistent storage using a global migration progress index, and providing the obtained portion of the data in response to the data access request.

In one aspect, a non-transitory computer readable storage medium in accordance with one or more embodiments of the invention stores instruction, the instructions when executed by a processor cause the processor to perform a method of operating a data storage device, the method includes obtaining a data access request for the data stored in the persistent storage, obtaining a portion of the data from the persistent storage using a global migration progress index, and providing the obtained portion of the data in response to the data access request.

### BRIEF DESCRIPTION OF DRAWINGS

FIG. 1A show a diagram of a system in accordance with one or more embodiments of the technology.
FIG. 1B show a diagram of a storage module in accordance with one or more embodiments of the technology.
FIG. 2A show a diagram of a relationship between objects and logical memory regions in accordance with one or more embodiments of the technology.
FIG. 2B show a diagram of a relationship between logical memory regions and physical memory regions in accordance with one or more embodiments of the technology.
FIG. 2C show a diagram of a relationship between a physical memory region and memory locations of the physical memory region in accordance with one or more embodiments of the technology.
FIG. 2D show a diagram of a physical memory location addressing table in accordance with one or more embodiments of the technology.
FIG. 2E show a diagram of a memory location translation data in accordance with one or more embodiments of the technology.
FIG. 2F show a diagram of a physical memory region in accordance with one or more embodiments of the technology.
FIG. 3A shows a flowchart of a method of accessing data in accordance with one or more embodiments of the technology.
FIG. 3B shows a flowchart of a method of obtaining data to facilitate access to the data in accordance with one or more embodiments of the technology.
FIG. 3C shows a flowchart of a method of identifying a start location within a physical memory region in accordance with one or more embodiments of the technology.
FIG. 3D shows a flowchart of a method of reading a portion of requested data to facilitate accessing the data in accordance with one or more embodiments of the technology.
FIG. 4A shows a flowchart of a method of storing data in accordance with one or more embodiments of the technology.
FIG. 4B shows a flowchart of a method of writing data in accordance with one or more embodiments of the technology.
FIG. 5 shows a flowchart of a method of performing a portion of a wear leveling cycle in accordance with one or more embodiments of the technology
FIG. 6A shows a diagram of an example mapping between logical memory regions and physical memory regions over time in accordance with one or more embodiments of the technology.
FIG. 6B shows a diagram of memory location translation data for a logical memory region of the example shown in FIG. 6A in accordance with one or more embodiments of the technology.

### DETAILED DESCRIPTION

Specific embodiments of the technology will now be described in detail with reference to the accompanying figures. Like elements in the various figures are denoted by like reference numerals for consistency.

In the following detailed description of embodiments of the technology, numerous specific details are set forth in order to provide a more thorough understanding of the technology. However, it will be apparent to one of ordinary skill in the art that the technology may be practiced without these specific details. In other instances, well-known features have not been described in detail to avoid unnecessarily complicating the description.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

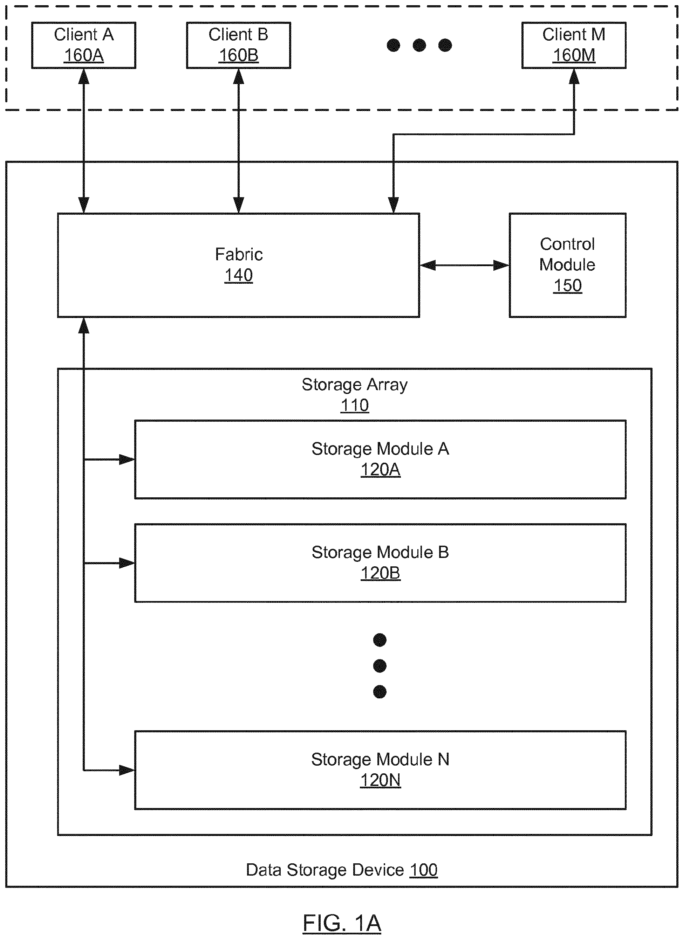

In the following description of FIGs. 1A-6B, any component described with regard to a figure, in various embodiments of the technology, may be equivalent to one or more like-named components described with regard to any other figure. For brevity, descriptions of these components will not be repeated with regard to each figure. Thus, each and every embodiment of the components of each figure is incorporated by reference and assumed to be optionally present within every other figure having one or more like-named components. Additionally, in accordance with various embodiments of the technology, any description of the components of a figure is to be interpreted as an optional embodiment which may be implemented in addition to, in conjunction with, or in place of the embodiments described with regard to a corresponding like-named component in any other figure.

In general, embodiments of the technology relate to data migration in solid state storage systems. More specifically, embodiments of the technology are directed to migrating data within a physical memory region to level the wear across the physical memory region. As used herein, wear of a physical memory regions refers to read/write cycles of the physical memory regions. In one or more embodiments of the technology, the physical memory regions may be portions of a solid state device having a limited number of read/write cycles before the solid state device, or a portion thereof, is rendered inoperable.

In one or more embodiments of the technology, the physical memory of a solid state memory device may be divided into a number of regions. Multiple regions may be aggregated together to form a macro region. Regions within a macro regions may be swapped with other regions periodically to level the wear across the macro region.

For example, a first region within a macro region may store data that is frequently modified which causes the physical memory used by the first region to degrade more quickly than other memory regions storing data that is infrequently modified. To prevent the physical memory used by a particular region from deteriorating more quickly than the other regions, the data stored in the particular region may be swapped with another region when a wear rate of the physical memory used by the particular region is determined to be higher than average. The aforementioned process may be repeated as necessary to wear level the solid state memory device.

Additionally, data stored in a particular region may be migrated within the region to level the wear across the region. Each physical memory region may include a number of memory locations for storing chunks of data. To facilitate data migration with the respective physical memory region, a memory location within each physical memory region may store a gap. As used herein, a gap refers to an intentionally unused memory location.

When performing wear leveling of a physical memory region, the data stored in a memory location and may be transposed with the gap. In other words, the data in the memory location may be copied to the second memory location storing the gap and the data in the memory location may be deleted after being copied. After transposing the two memory locations, a logical address to a physical address translation associated with the physical memory region may be updated. In other words, the logical to physical address mappings associated with the physical memory region may be updated so that the now-stored data may be retrieved in the future.

In one or more embodiments of the invention, deleting data from a physical memory region may be performed by either (i) writing a byte sequence to the memory region, e.g., all 0s or any other type of sequence that makes all or a portion of the byte sequence stored in the physical memory region irretrievable, or (ii) by indicating that that memory region has been deleted without changing the byte sequence already stored in the physical memory region. In other words, in one or more embodiments of the invention, the data stored in a physical memory region may be deleted without changing the byte sequence stored in the physical memory region. Rather, the physical memory region may be marked as available and treated as though no data is stored in the physical memory region.

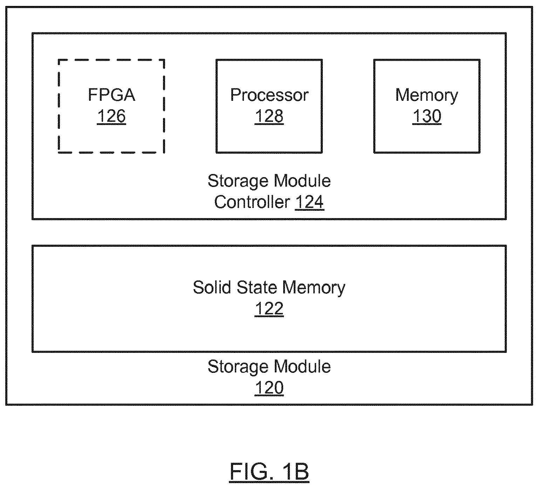

FIGS. 1A and 1B show a system and a storage module of the system, respectively, in accordance with one or more embodiments of the technology. Referring to FIG. 1A, the system includes one or more clients (client A (160A) - client M (160M)) that are operatively connected to a data storage device (100).

In one embodiment of the technology, the clients (160A-160M) may be any type of physical system that includes functionality to issue a read request to the data storage device (100) and/or to issue a write request to the data storage device (100). Though not shown in FIG. 1A, each of the clients (160A-160M) may include a client processor (not shown), client memory (not shown), and any other software and/or hardware necessary to implement one or more embodiments of the technology.

In one embodiment of the technology, the clients (160A-160M) are configured to execute an operating system (OS) that includes a file system, a block device driver, an application programming interface (API) to enable the client to access the data storage device, and/or a user programming library. The file system, the block device driver and/or the user programming library provide mechanisms for the storage and retrieval of files from the data storage device (100). More specifically, the file system, the block device driver and/or the user programming library include functionality to perform the necessary actions to issue read requests and write requests to the data storage device. They may also provide programming interfaces to enable the creation and deletion of files, reading and writing of files, performing seeks within a file, creating and deleting directories, managing directory contents, etc. In addition, they may also provide management interfaces to create and delete file systems. In one embodiment of the technology, to access a file, the operating system (via the file system, the block device driver and/or the user programming library) typically provides file manipulation interfaces to open, close, read, and write the data within each file and/or to manipulate the corresponding metadata.

In one embodiment of the technology, the clients (160A-160M) interface with the fabric (140) of the data storage device (100) to communicate with the data storage device (100), as further described below.

In one embodiment of the technology, the data storage device (100) is a system that includes persistent storage such as solid state memory, and is configured to service read requests and/or write requests from one or more clients (160A-160M).

The data storage device (100), in accordance with one or more embodiments of the technology, includes one or more storage modules (120A-120N) organized in a storage array (110), a control module (150), and a fabric (140) that interfaces the storage module(s) (120A-120N) with the clients (160A-160M) and the control module (150). Each of these components is described below.

The storage array (110), in accordance with an embodiment of the technology, accommodates one or more storage modules (120A-120N). The storage array may enable a modular configuration of the data storage device, where storage modules may be added to or removed from the data storage device (100), as needed or desired. A storage module (120), in accordance with an embodiment of the technology, is described below, with reference to FIG. 1B.

Continuing with the discussion of the data storage device (100), the data storage device includes the fabric (140). The fabric (140) may provide connectivity between the clients (160A-160M), the storage module(s) (120A-120N) and the control module (150) using one or more of the following protocols: Peripheral Component Interconnect (PCI), PCI-Express (PCIe), PCI-eXtended (PCI-X), Non-Volatile Memory Express (NVMe), Non-Volatile Memory Express (NVMe) over a PCI-Express fabric, Non-Volatile Memory Express (NVMe) over an Ethernet fabric, and Non-Volatile Memory Express (NVMe) over an Infiniband fabric. Those skilled in the art will appreciate that the technology is not limited to the aforementioned protocols.

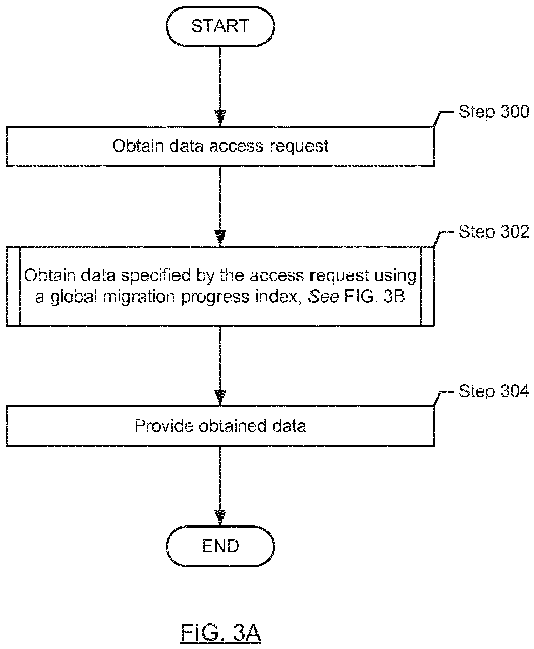

Further, in one or more embodiments of the technology, the data storage device (100) includes the control module (150). In general, the control module (150) is a hardware module that may be configured to perform administrative tasks such as allocating and de-allocating memory regions in the solid state memory modules (120A-120N) and making allocated memory regions accessible to the clients (160A-160M). Further, the control module may perform one or more steps to balance the wear within a memory region. In one embodiment of the technology, these functions (e.g., one or more of the steps described in FIGS. 3A-5B) are performed by the control module (150).

The control module (150) interfaces with the fabric (140) in order to communicate with the storage module(s) (120A-120N) and/or the clients (160A-160M). The control module may support one or more of the following communication standards: PCI, PCIe, PCI-X, Ethernet (including, but not limited to, the various standards defined under the IEEE 802.3a- 802.3bj), Infiniband, and Remote Direct Memory Access (RDMA) over Converged Ethernet (RoCE), or any other communication standard necessary to interface with the fabric (140).

FIG. 1B shows a storage module, in accordance with one or more embodiments of the technology. The storage module (120) includes solid-state memory (122) to persistently store data. In one embodiment of the technology, the solid-state memory (122) of the storage module (120) may include, but is not limited to, Spin Torque Magnetic Random Access Memory (ST-RAM) and Phase Change Memory (PCM). Generally, the solid state memory (122) may correspond to any type of memory that has a finite number of program-erase cycles or write cycles. In one or more embodiments of the technology, the limited number of program-erase or write cycles necessitates the use of methods to avoid excessive writes to the same region of the solid state memory in order to prevent data loss, as described in detail below.

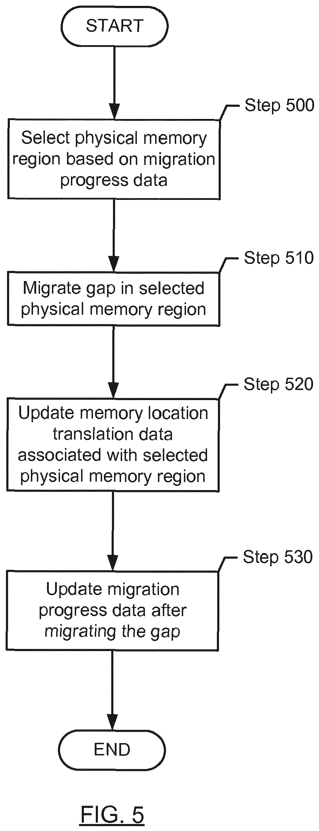

Continuing with the discussion of the storage module (120), shown in FIG. 1B, the storage module (120), in accordance with one or more embodiments of the technology, further includes a storage module controller (124). In one embodiment of the technology, the storage module controller (124) is configured to receive and service requests to read from and/or write data to the solid state memory (122). These requests may originate from the clients (160A-160M) or from the control module (150), and may be conveyed to the storage module controller (124) via the fabric (140). The storage module controller (124) may perform one or more of the steps described in FIG. 3A-3D in order to service a read or write request. Further, the storage module controller (124) may perform or may support administrative tasks including the methods described in FIG. 5.

In one embodiment of the technology, the storage module controller (124) includes a processor (128) (e.g., one or more cores, or micro-cores of a processor that are configured to execute instructions) and memory (130) (e.g., volatile memory that may be, but is not limited to, dynamic random-access memory (DRAM), synchronous DRAM, SDR SDRAM, and DDR SDRAM) to perform at least one of the steps described in FIGS. 3A-5. Alternatively or additionally, the storage module controller (124) may include a field-programmable gate array (FPGA) and/or an application-specific integrated circuit (ASIC) (126). In a storage module controller that includes an FPGA and/or ASIC and a processor, the FPGA and/or ASIC may primarily service read and write requests, whereas the processor may handle or support administrative tasks, including those related to wear balancing and/or data migration, as further described below.

One skilled in the art will recognize that the architecture of the system is not limited to the components shown in FIGS. 1A and 1B. For example, the components of the data storage device (100) may include any number of storage modules (120A-120N). Further, the storage module controller (124) of the storage module (120) and the control module (150) of the data storage device (100) may be equipped with central processing units (CPUs), field-programmable gate arrays (FPGAs), application-specific integrated circuits (ASICs) and/or any other type of processor, without departing from the technology. In addition, the fabric may be based on communication standards other than those discussed above, without departing from the technology.

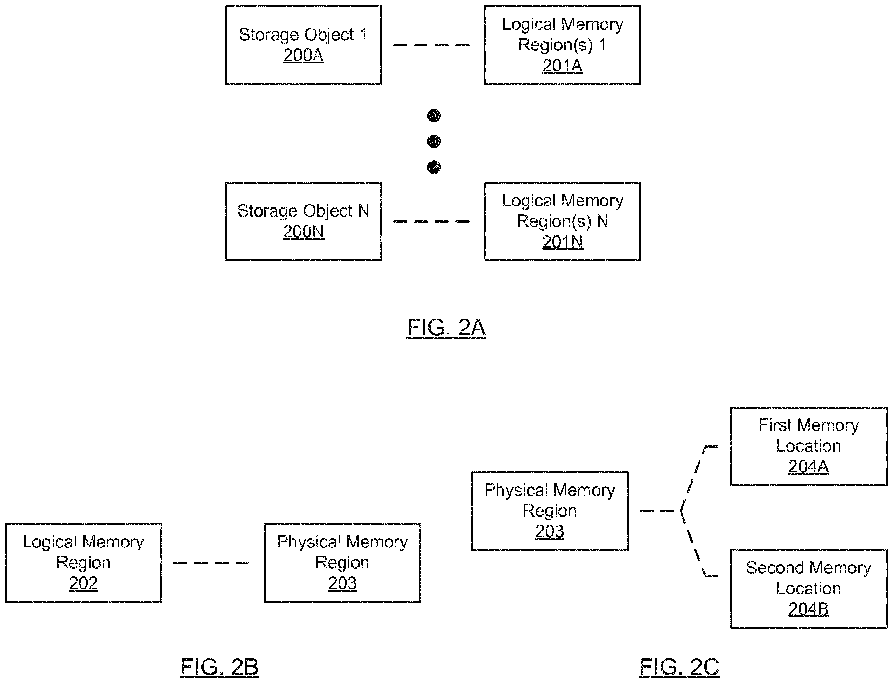

The solid state memory (122) of a storage module may store data from the clients. To facilitate performance of wear leveling, the stored data may be associated with a set of logical addresses. The logical addresses may be associated with corresponding physical storage addresses of the solid state memory. To further clarify these relationships, FIGS. 2A-2C show relationship diagrams between storage objects, logical memory regions, physical memory regions, and memory locations.

FIG. 2A shows a first relationship diagram in accordance with one or more embodiments of the technology. The first relationship diagram illustrates relationships between storage objects (200A-200N) and logical memory regions (201A-201N). As seen from the diagram, each storage object may be associated with logical memory regions. As used herein, a storage object refers to a portion of a client's data stored in a storage module. As used herein, a logical memory region refers to a quantity of data storage of the storage module abstracted from the physical memory of the storage module. Multiple logical memory regions may be associated with a single storage object.

FIG. 2B shows a second relationship diagram in accordance with one or more embodiments of the technology. The second relationship diagram illustrates relationships between a logical memory region (202) and a physical memory region (203). The logical memory region (202) may be associated with a physical memory region (203) of a solid state storage of a storage module. As used herein, a physical memory region refers to an addressable quantity of data storage hosted by a solid state storage of the storage module. There may be a one to one relationship between logical memory regions and physical memory regions.

FIG. 2C shows a third relationship diagram in accordance with one or more embodiments of the technology. The third relationship diagram illustrates relationships between a physical memory region (203) and memory locations (204A, 204B). The physical memory region (203) may include a number of memory locations. As used herein, a memory location may be the minimum quantity of physical storage of the solid state storage of the storage module that may be addressed.

As discussed above with respect to FIG. 2A, storage objects may be associated with logical memory regions that are logical representations of data stored in physical memory regions. To obtain the data stored in the physical memory regions, an addressing table may be used to convert the logical memory regions to physical representation used to read and write operations to/from the physical memory regions of solid state storage.

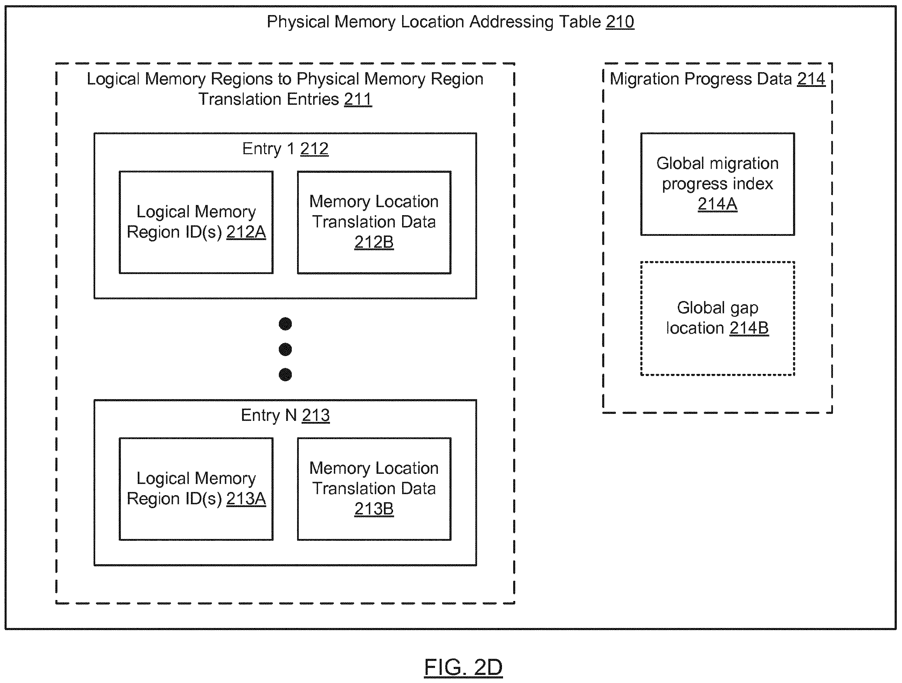

FIG. 2D shows a diagram of a physical memory location addressing table (210) in accordance with one or more embodiments of the technology. The addressing table (210) may be a data structure stored on a storage device. The addressing table (210) may include information used to translate logical memory regions to physical memory regions and thereby enable the data previously stored using the logical memory regions to be retrieves.

In one or more embodiments of the invention, a data storage device (100, FIG. 1A) may include a physical memory location addressing table (210) for each macro region, i.e., a logical grouping of logical memory regions, of the data storage device. Each physical memory location addressing table may be used to store/obtain data in the macro region. While illustrated in FIG. 2D as separate structures, multiple physical memory location addressing tables may be integrated into a single data structure without departing from the invention.

The addressing table may include logical memory regions to physical memory region translation entries (211). Each entry (212, 213) of the translation entries (211) may include a logical memory region identifier (212A, 213A) and memory location translation data (212B, 213B). The memory location translation data (212B, 213B) may be used, in part, to retrieve data that was previously stored in a physical memory region. Thus, each entry (212, 213) may include information necessary to obtain data previously stored in a logical memory region.

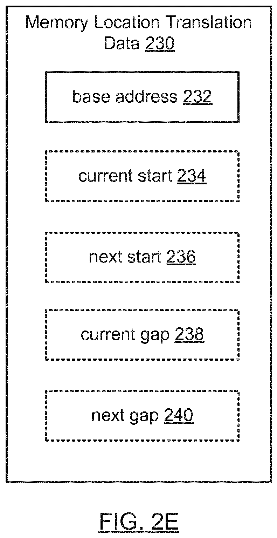

As discussed above, data stored in a physical memory region may be migrated within the physical memory region to wear level the physical memory region. The memory location translation data (212B, 213B) of each entry may also include information that specifies how the data in the physical memory region has been migrated within the region. For additional details regarding the memory location translation data, See FIG. 2E.

The addressing table (210) may also include migration progress data (214) associated with the macro region. The migration progress data (214) may be used to migrate data store/retrieve data from the macro region and/or perform migrating of the data within each physical memory region of the macro region for wear leveling purposes. Thus, physical memory regions may be in various states of migration, i.e., pre or post migration cycle. The migration progress data (214) may include information that specifies which physical memory regions have completed a data migration cycle and which physical memory regions have not completed the data migration cycle.

In one or more embodiments of the technology, the migration progress data (202) includes a global migration progress index (214A). The global migration progress index (214A) may specify a portion of the physical memory regions of the macro region that have completed a data migration cycle and a second portion of the physical memory regions of the macro region that have not completed a data migration cycle.

In some embodiments of the technology, the global migration progress index (214A) may also specify a start location within each physical storage region. As will be discussed below, migrating data may rotate the data among the storage locations within each physical memory region. The start location may specify a memory location of the physical memory region corresponding to the start of the logical memory region associated with the physical storage region.

For example, if the characters ABCDGap were written to a physical memory location, migrating the data rotates the characters to be stored in the order CDGapAB. The start location specified by the global migration progress index (214A) may specify the fourth character, A, in the migrated data. By knowing the start location, within a physical memory region, the impact of migration on data stored in a physical memory location can be removed.

In one or more embodiments of the technology, the global migration progress index (214A) may be implemented as a counter. Each time a physical memory region is migrated the counter may be incremented. Dividing the value of the counter by the number of physical memory regions may indicate: (i) the start location and (ii) the portion of physical memory regions that have not yet been migrated in the current cycle.

In one or more embodiments of the technology, the migration progress data (214) may include a global gap location. As discussed above, performing migration within a physical memory region may move the gap within the physical memory region. For any given migration cycle, the gap may be located in the same, relative position within each physical memory region. Thus, the global gap location may indicate the position of the gap within each physical memory region. However, the gap location may be different for physical memory regions that have completed a migration cycle and physical memory regions that have not completed the migration cycle. In other embodiments of the technology, the gap location may be recorded for each physical memory region in the memory location translation data.

While the physical memory location addressing table (210) is illustrated as a single data structure, multiple or different types of data structures may be used to store the information included in the physical memory location addressing table (210) without departing from the invention. For example, the migration progress data (214) may be stored in a data structure separately from the physical memory location addressing table (210).

FIG. 2E shows a diagram of an example memory location translation data (230) in accordance with one or more embodiments of the technology. The memory location translation data (230) may include information used to translate logical memory regions to physical memory region access information. The memory location translation data (230) may include a base address (232), a current start (234), a next start (236), a current gap (238), and/or a next gap (240). Each of the aforementioned items may be used to obtain data that has been migrated while stored in a physical memory region, and are discussed in turn below.

The base address (232) may specify a location of a physical memory region. The base address (232) may uniquely address the physical memory region.

The current start (234) may specify a memory location within a physical memory region. The current start (234) may specify a memory location storing the start of data stored in the physical memory region. In one or more embodiments of the technology, the current start (234) may be continuously updated as data is migrated within the physical memory region to reflect the relative movement of the data within the physical memory region.

For example, a memory region may include the data ABCGap at a first point in time (where A, B, and C represent data stored in memory locations with a memory region and Gap represents a gap stored in a memory location of the memory region; similar notation is used throughout the application to describe data and gaps stored in physical memory regions). At the first point in time, the current start (234) may specify the first memory location, i.e., the memory location storing A. At a second point in time, the data may be migrated to be arranged as GapABC. After the second point in time, the current start (234) may specify the second memory, i.e., the memory location storing A.

The next start (236) may specify a memory location within a physical memory region. The next start (236) may specify a memory location that will store the start of data stored in the physical memory region after the next data migration cycle has completed. In one or more embodiments of the technology, the next start (236) may be continuously updated as data is migrated within the physical memory region to reflect the relative movement of the data within the physical memory region.

For example, a memory region may include the data ABCGap at a first point in time. At the first point in time, the next start (236) may specify the second memory location, i.e., the memory location that will store A after the next migration cycle is completed. At a second point in time, the data may be migrated to be arranged as GapABC, i.e., after completing the next migration cycle. After the second point in time, the next start (236) may specify the third memory, i.e., the memory location that will store A after completing a second migration cycle.

The current gap (238) may specify a memory location within a physical memory region storing a gap. In one or more embodiments of the technology, the current gap (238) may be continuously updated as data is migrated within the physical memory region to reflect the relative movement of the gap within the physical memory region.

For example, a memory region may include the data ABCGap at a first point in time. At the first point in time, the current gap (238) may specify the fourth memory location, i.e., the memory location storing Gap. At a second point in time, the data may be migrated to be arranged as GapABC. After the second point in time, the current gap (238) may specify the first memory, i.e., the memory location storing the Gap.

The next gap (240) may specify a memory location within a physical memory region that will store the Gap after the next data migration cycle has completed. In one or more embodiments of the technology, the next gap (240) may be continuously updated as data is migrated within the physical memory region to reflect the relative movement of the Gap within the physical memory region.

For example, a memory region may include the data ABCGap at a first point in time. At the first point in time, the next gap (240) may specify the first memory location, *i.e.,* the memory location that will the Gap after the next migration cycle is completed. At a second point in time, the data may be migrated to be arranged as GapABC, *i.e.,* after completing the next migration cycle. After the second point in time, the next gap (240) may specify the second memory location, i.e., the memory location that will store the Gap after completing a second migration cycle.

While the memory location translation data (230) is illustrated as including a base address (232), current start (234), next start (236), current gap (238), and next gap (240), one or more embodiments of the technology may include more, less, or different types of information without departing from the invention. For example, the memory location translation data (230) may not include the portions shown in dashing in FIG. 2E.

To further clarify relationships between physical memory regions and memory locations of the physical memory regions, FIG. 2C shows an exemplary structure of a physical memory region (280), in accordance with one or more embodiments of the technology. The physical memory region (280) may be a memory region allocated in the solid state memory (122, FIG. 1B) of a storage module (120) and may be used to accommodate a storage object (e.g., 200A). The physical memory region (280) may be addressed by translating logical memory addresses to physical memory addresses using the physical memory location addressing table (210, FIG. 2D).

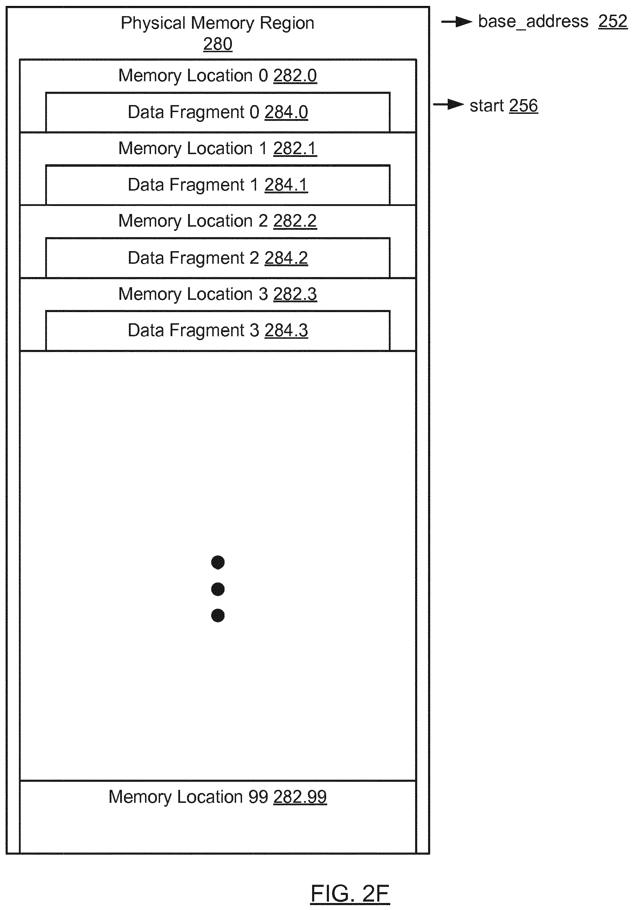

The exemplary physical memory region in FIG. 2F includes 100 memory locations (282.0-282.99) to accommodate 99 data fragments that form the storage object. Each memory location may be a sub region of the physical memory region (280) and each memory location is of a specified size. A memory location may include a specified number of bits (e.g., if a memory location is configured to store a single variable only), or it may span larger regions, e.g., bytes, kilobytes, megabytes, etc. A memory location may be occupied by a data fragment (e.g., data fragments 0-3 (284.0-284.3), or it may be empty (e.g., memory location 99 (282.99). A complete set of data fragments, stored in the solid state memory region, may form a storage object, as previously described in FIG. 2A.

Each of the memory locations (282.0-282.99) may be addressed using a combination of the base_address (252) and an additional offset from the base address. The offset may be specified by, for example, current start (234) or next start (236). Consider, for example, a scenario in which the physical memory region (280), as shown in FIG. 2F, begins at base address 1,000. To reach the first data fragment (data fragment 0 (284.0)) of the storage object stored in the physical memory region (280), the base address "1,000" may be used in combination with an offset to reach memory location 0. To reach the third data fragment (data fragment 2 (284.2)), the base address "1,000" may be used in combination with a second offset to reach memory location 2.

One skilled in the art will recognize that the solid state memory regions are not limited to the exemplary solid state memory region shown in FIG. 2F. For example, the size of the solid state memory region may vary. Further, memory location translation data (e.g., 230 FIG. 2E) of entries (212, 213, FIG. 2D) including base address and start may be expressed using various formats. While in the above description discrete numbers (e.g. memory location 0, 1, 2, ...) were used to express these quantities, they may alternatively be expressed using other units, for example units of memory, e.g., bits, bytes, kilobytes, etc.

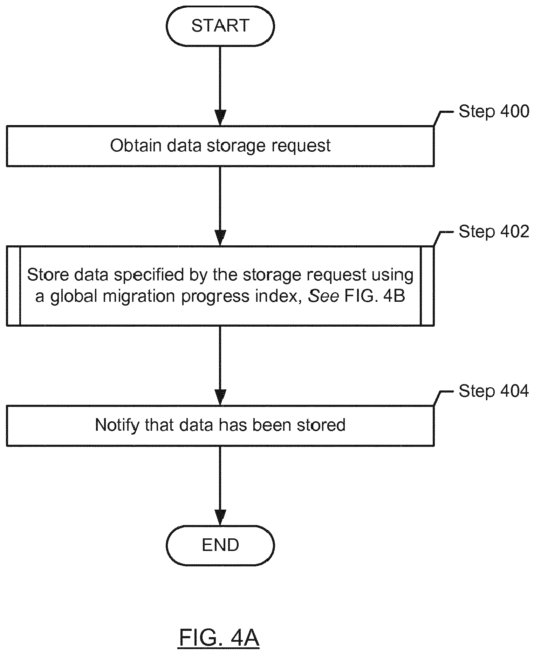

FIGs. 3A-5 show flowcharts in accordance with one or more embodiments of the technology. More specifically, FIGs. 3A-3D shows a method for accessing data in accordance with an embodiment of the technology. FIGs. 4A-4B show methods for writing data in accordance with one or more embodiments of the technology. FIG. 5 shows a method of performing wear leveling in accordance with one or more embodiments of the technology.

While illustrated as separate methods, each of the methods illustrated in FIGs. 3A-5 may be performed sequentially or in parallel (or a combination of both serial and parallel execution) without departing from the invention. For example, the method of performing wear leveling shown in FIG. 5 may be performed periodically while data is accessed via the methods illustrated in FIGs. 3A-3D. Further, one of ordinary skill will appreciate that some or all of these steps may be executed in different orders, may be combined or omitted, and some or all of the steps may be executed in parallel.

FIG. 3A shows a method for accessing data in accordance with an embodiment of the technology.

Turning to FIG. 3A, in Step 300, a data access request is obtained. The data access request may be obtained by receiving the request from a client. The data access request may specify a data object previously stored by the client or a different client.

In Step 302, the data specified by the data access request is obtained using the a global migration progress index.

In one or more embodiments of the technology, the data specified by the data access request may be obtained by identifying a plurality of a logical memory regions associated with a data object. Logical memory translation data for each logical memory region specified in a physical memory location addressing table may be used to obtain solid state storage reading data for each logical memory region. Solid state storage may then be read using the solid state storage reading data. For example, as described with respect to FIG. 2E, the memory location translation data associated with a logical memory region may include a base address that provides information, e.g., an address, of a physical memory region.

Once the physical memory region is read, the global migration progress index and/or additional information included in the memory location translation data may be used to rearrange the read data into an ordering in which it was originally stored in the physical memory region.

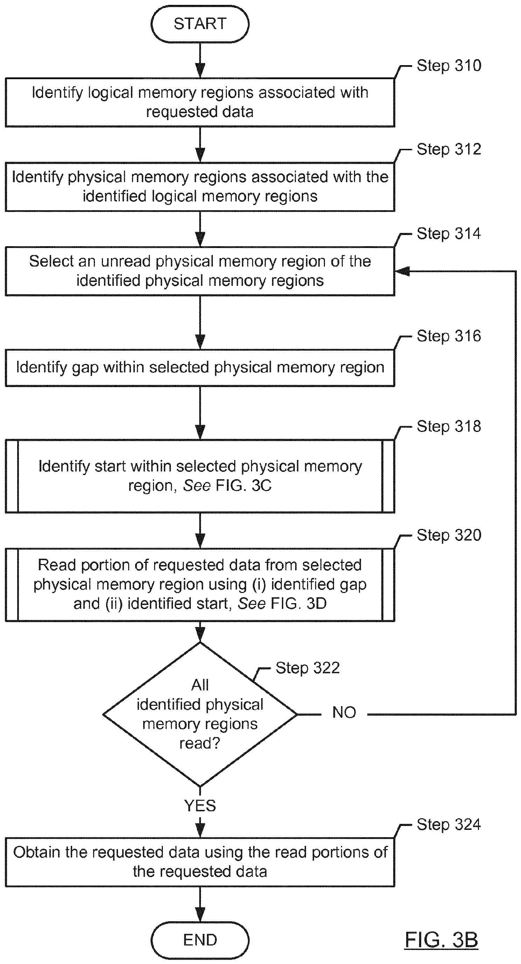

In one or more embodiments of the technology, the data specified by the data access request may be obtained using the method illustrated in FIG. 3B.

In Step 304, the data obtained in Step 302 is provided in response to the data access request.

The method may end following Step 304.

FIG. 3B shows a method for reading data in accordance with an embodiment of the technology.

In Step 310, logical memory regions associated with the requested data are identified. The logical memory regions may be identified using a mapping as illustrated in in FIG. 2A. Other methods of identifying the logical memory regions may be used without departing from the technology.

In Step 312, physical memory regions associated with the identified logical memory regions are identified. The physical memory regions may be identified using a mapping as illustrated FIG. 2B and/or a translation table as illustrated in Fig. 2D. Other methods of identifying the physical memory regions may be used without departing from the technology.

In Step 314, an unread physical memory region of the identified physical memory regions is selected. All physical memory regions may be considered to be unread upon the first performance of Step 314.

In Step 316, a gap within the selected physical memory region is identified. The gap and its associated location may be identified based on information included in a memory location translation data or may be calculated based on the value of the migration progress index.

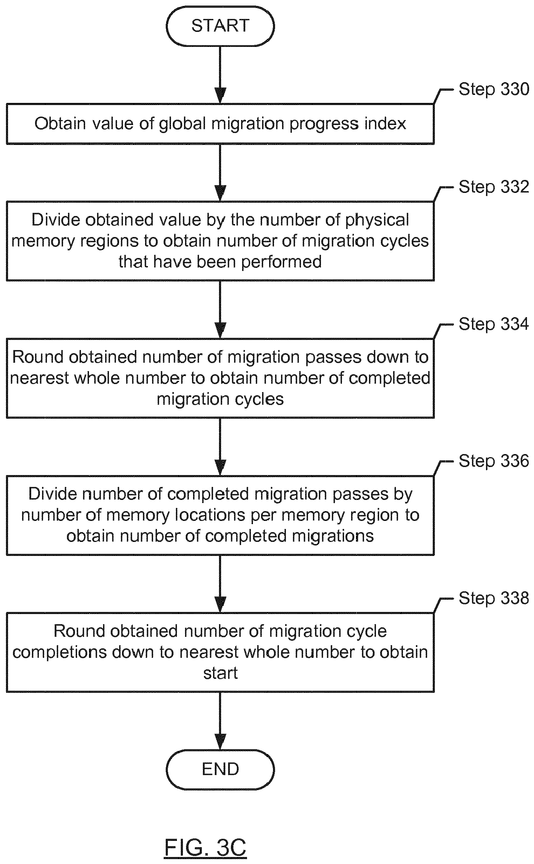

In Step 318, a start within the selected physical memory region is identified. In one or more embodiments of the technology, the start may be identified using data included in memory location translation data associated with the selected physical memory region. In one or more embodiments of the technology, the start may be determined based on a value of the migration progress index. In one or more embodiments of the technology, the start may be identified via the method illustrated in FIG. 3C.

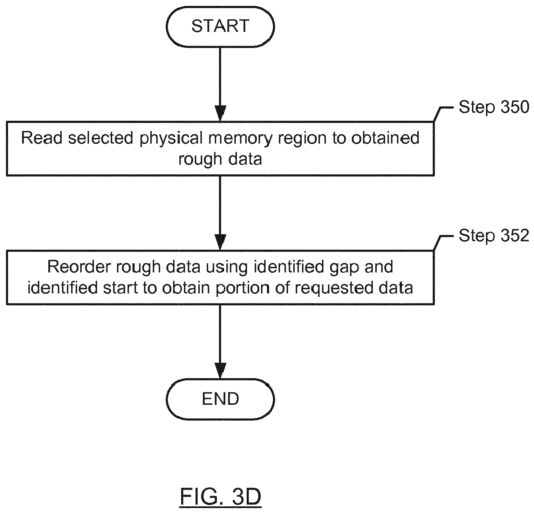

In Step 320, a portion of the requested data is read from the selected physical memory region using: (i) the identified gap and (ii) the identified start. As discussed above, the data in any physical memory region may be rearranged within the physical memory region from when it was originally-stored in the physical memory region. The data in the physical memory region maybe rearranged using the identified gap and the identified start into an order in which in which it was originally stored in the physical memory region. The portion of the requested data may be read via the method illustrated in FIG. 3D.

In Step 322, it is determined whether all of the identified physical memory regions have been read. If all of the identified physical memory regions have been read, the method may proceed to Step 324. If all of the identified physical memory regions have not been read, the method may proceed to Step 314.

In Step 324, the requested data is obtained using the read portions of the requested data. In other words, each of the portions obtained in 320 may be appended or otherwise arranged into the requested data.

The method may end following Step 324.

FIG. 3C shows a method for obtaining a start in accordance with an embodiment of the technology.

In Step 330, a value of the global migration progress index is obtained.

In Step 332, the value is divided by the number of physical memory regions to obtain the number of migration cycles that have been performed.

In Step 334, the obtained number of migration cycles is rounded down to the nearest whole number to obtainer the number of completed migration cycles.

In Step 336, the number of completed migration passes is divided by the number of memory location per memory region to obtain the number of completed migrations.

In Step 338, the number of completed migrations is rounded to the nearest whole number to obtain the start. The start may be the current start (234) shows in FIG. 2E.

The method may end following Step 338.

FIG. 3E shows a method for reading a portion of requested data in accordance with an embodiment of the technology.

In Step 350, a physical memory region is read to obtain rough data. As used herein, rough data refers to data that was reordered as part of a migration cycle while stored in the physical memory region.

In Step 352, the rough data is reordered using the identified gap and identified start to obtain the portion of the requested data.

As discussed above, migrating the data may cause the data and gap within a physical memory region to rotate within the physical memory region. The start may specify the memory location within the physical memory region where the first memory location is now located after being migrated. The identified gap may specify the gap location within the physical memory location after the data has been rotated due to migration. Knowing these two characteristics of the rough data, the rough data may be rearranged to obtain the data as originally-stored in the physical memory region.

For example, a physical memory region may originally store ABCDEGap where A, B, C, D, and E represent data stored in separate memory location of the physical memory region and Gap represent a gap. After performing migration, the data may be rearranged as DGapEABC with start specifying the fourth memory location, i.e., the memory location storing A, and the identified gap specifying the second memory location, i.e., the memory location storing the gap. After reading the rough data, i.e., DGapEABC, start may be used to rearrange the rough data by rotating the rough data three memory locations to the left, i.e., start - 1 memory location, resulting in the data being arranged as ABCDGapE. After rotated, the values of start and Gap maybe used to remove the gap from the data resulting in the rough data being rearranged as ABCDE.

The method may end following Step 353.

FIG. 4A shows a method for storing data in accordance with an embodiment of the technology.

Turning to FIG. 4A, in Step 400, a data storage request is obtained. The data storage request may be obtained by receiving the request from a client. The data storage request may specify data to be stored.

In Step 402, the data specified by the data storage request is stored using the a global migration progress index.

In one or more embodiments of the technology, the data specified by the data storage request may be stored by identifying a plurality of a logical memory regions that will be used when storing the data object. Logical memory translation data for each logical memory region, specified in a physical memory location addressing table, may be used to obtain solid state storage storing data for each logical memory region. The data may be stored in solid state storage using the solid state storage storing data. For example, as described with respect to FIG. 2E, the memory location translation data associated with a logical memory region may include a base address that provides information, *e.g.,* an address, of a physical memory region in which a portion of the to-be-stored data will be stored. Portions of the to-be-stored data may be stored in any number of physical memory regions to accommodate the data.

In one or more embodiments of the technology, before storing the data in the physical memory region, the global migration progress index and/or additional information included in the memory location translation data may be used to rearrange the to-be-stored data so that it may be retrieved using the global migration progress index and/or additional information included in the memory location translation data.

In one or more embodiments of the technology, a portion of the data and a gap may be stored in the physical memory region without being arranged based on the global migration progress index and/or additional information included in the memory location translation data. Rather, after storing the data in the physical memory location, the current start and current gap that specify the locations and start and gap within the physical memory region, respectively, specified by memory location translation data associated with the physical memory region may be updated to reflect the location of the start and gap after the portion of the data is stored.

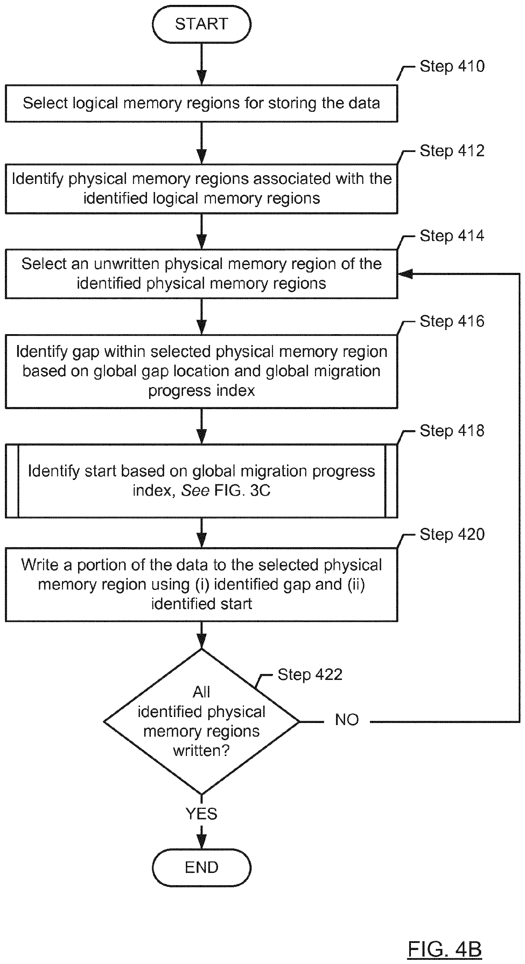

In one or more embodiments of the technology, the data specified by the data storage request may be stored using the method illustrated in FIG. 4B.

In Step 404, the entity that sent the data storage request is notified that the data has been stored.

The method may end following Step 404.

FIG. 4B shows a method for storing portions of data in accordance with an embodiment of the technology.

In Step 410, logical memory regions are selected for storing the to-be-stored data. The logical memory regions may be associated with the to-be-stored data as illustrated in FIG. 2A.

In Step 412, physical memory regions associated with the identified logical memory regions are identified. The physical memory regions may be identified using a mapping as illustrated FIG. 2B and/or a translation table as illustrated in Fig. 2D. Other methods of identifying the physical memory regions may be used without departing from the technology.

In Step 414, an unwritten physical memory region of the identified physical memory regions is selected. As used herein, an unwritten physical memory region refers to a physical memory region selected in Step 412 that has not been written to include a portion of the to-be-written data. All physical memory regions identified in Step 412 may be considered to be unwritten upon the first performance of Step 414.

In Step 416, a gap within the selected physical memory region is identified. The gap and its associated location may be identified based on information included in a memory location translation data or may be calculated based on the value of the migration progress index.

In Step 418, a start within the selected physical memory region is identified. In one or more embodiments of the technology, the start may be identified using data included in memory location translation data associated with the selected physical memory region. In one or more embodiments of the technology, the start may be determined based on a value of the migration progress index. In one or more embodiments of the technology, the start may be identified via the method illustrated in FIG. 3C.

In Step 420, a portion of the to-be-written data is written in the selected physical memory region using: (i) the identified gap and (ii) the identified start. As discussed above, the data in any physical memory region may be rearranged within the physical memory region from when it was originally-stored in the physical memory region due to migration for wear leveling. The data in the physical memory region maybe rearranged using the identified gap and the identified start into an order to match up with a migration state of the physical memory region. As used herein, a migration state may refer to the state of rearrangement of data within a physical memory region due to migration for wear leveling of the physical memory region.

For example, a portion of to-be-stored data may be ABCDE where A, B, C, D, and E are individual data fragments of the portion. The physical memory region where the portion is to be written may have a start of 2 and a gap of 3. Based on the start, the data may be rearranged as EABCD. Based on the gap, a gap may be inserted resulting in the data being arranged as EAGapBCD. The rearranged data may then be written to the physical memory location.

In Step 422, it is determined whether all of the identified physical memory regions have been written. In other words, if all of the physical memory regions identified in Step 412 include portions of the to-be-written data. If all of the identified physical memory regions have been written, the method may end following Step 424. If all of the identified physical memory regions have not been written, the method may proceed to Step 414.

As discussed above, data may be migrated for wear leveling of physical memory regions while data is accessed/stored in the physical memory regions.

FIG. 5 shows a method for migrating data in accordance with an embodiment of the technology. The method shown in FIG. 5 maybe performed periodically or intermittently over time to wear level physical memory regions. In a migration cycle, each physical memory region of a solid state storage may be migrated using the method shown in FIG. 5.

In Step 500, a physical memory region is selected based on a migration progress index. The migration progress index may indicate a physical memory region that has not been migrated as part of a migration cycle. The physical memory region that has not been migrated may be selected.

In one or more embodiments of the technology, each physical memory region may be addressed using a unique identifier, i.e., base address. In other words, the physical memory regions may be enumerated. The migration progress index may specify the base address of one of the physical memory regions. All of the physical memory regions having a base address less than the migration progress index may be considered to have not been migrated as part of the migration cycle. When a physical memory region is migrated, the migration progress index may be updated, as will be discussed with respect to Step 530, to reflect that the physical memory region has been migrated.

In Step 510, the selected physical memory region is migrated. In one or more embodiments of the technology, the physical memory region may be migrated by transposing the physical memory location including the gap with a second physical memory locating storing a data fragment. The second physical memory location may be based on the memory location that includes the gap. In other words, whenever data is migrated when the gap is in a particular memory location the same memory location may be used as the second memory location.

In one or more embodiments of the technology, basing the second physical memory location on the memory location including the gap may result in the gap following a periodic pattern through the memory location of a physical memory region during multiple migration cycles. The pattern may result in the gap being stored in each memory location before it is stored a second time in any memory location.

In one or more embodiments of the technology, the second memory location may be the next lowest memory location from the memory location storing the gap and wrap to the highest memory location from the lowest memory location. For example, a physical memory region may include memory locations 1, 2, 3, 4, 5, and 6. If the memory locations store A, B, C, Gap, D, and E, respectively, the second memory location is 3. If the memory locations store A, Gap, B, C, D, and E, respectively, the second memory location is 1. If the memory locations store Gap, A, B, C, D, and E, respectively, the second memory location is 6.

Other rules and patterns for transposing of memory locations when performing migration may be used without departing from the technology.

In Step 520, memory location translation data associated with the selected physical memory region is updated. As discussed with respect to FIG. 2E, a current start, next start, current gap, and next gap may be updated to reflect the current position of each within a physical memory location after a migration is performed on the physical memory location.

In Step 530, the migration progress data is updated after the gap is migrated in the selected physical memory region. As discussed above, the migration progress data may include a migration progress index that indicates physical memory locations that have not yet been migrated as part of a migration cycle. After the selected physical memory location is migrated, the migration progress may be updated to reflect that the selected physical memory location has been migrated.

In one or more embodiments of the technology, all of the physical memory regions are enumerated based on the values of a base address specified by memory location translation data associated with each physical memory region. When a migration cycle is first initiated, the migration progress index may specify the physical memory location having the highest base address. After a physical memory region is migrated, the migration progress index may be decremented to specify the physical memory location having the next lowest base address. A migration cycle may be completed when the migration progress index is decremented when the physical memory region having the lowest base address is migrated.

In one or more embodiments of the technology, the migration progress index may be set to specify the physical memory region having the highest associated base address.

The method may end following Step 530.

### Example Use Case

The use case scenario described below is intended to provide an example of the method for data migration described in FIG. 5 and is for illustrative purposes only. The use case scenario is based on a system similar to the one shown in FIGs. 1A-1B, in which data is written to/read from a physical memory region of a solid state memory/storage. One skilled in the art will recognize that the method described in FIG. 5 is not limited to the use case scenario described below, but rather is universally applicable to a wide range of solid state memory-based systems of different configuration, complexity and size.

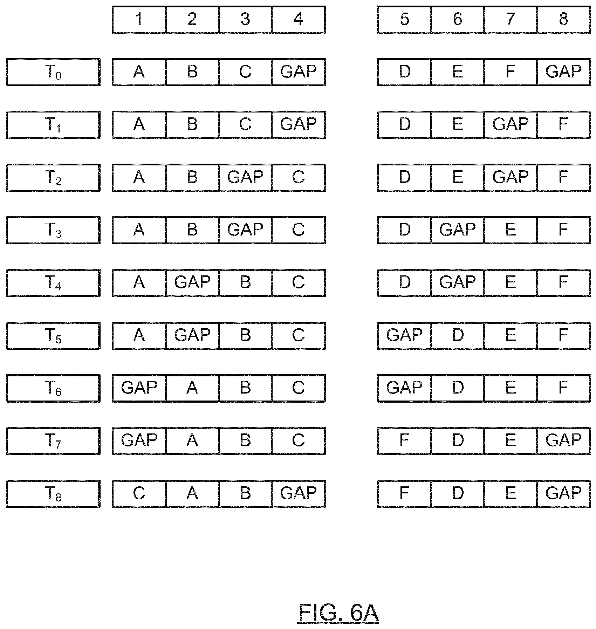

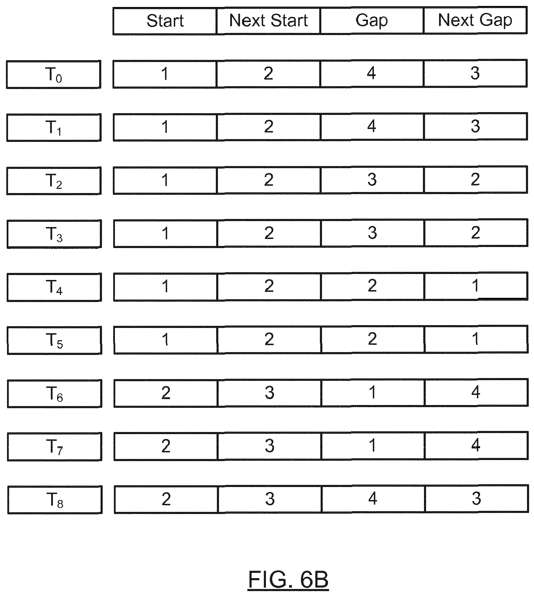

Consider a scenario in which two physical memory regions are used to store data that consists of six data fragments A-F. FIG. 6A show a diagram of these physical memory regions overtime as migration cycles are performed on the physical memory regions. Each of the rows labeled T₁-T₈ represent points in time and the columns represent the data stored in each of the memory locations of the physical memory regions. FIG. 6B shows the memory location translation data associated with one of the physical memory regions over a corresponding time to that of FIG. 6A. Each of the rows labeled T₁-T₈ represent points in time and the columns represent the values of start, next start, gap, and next gap, respectively.

As shown in the top labeled T₀ of FIG. 6A, the data fragments A-C are stored in consecutively ordered memory locations 1, 2, 3, and 4, as indicated by the top row of the table. Similarly, data fragments D-F are stored in memory locations 5-7 and a gap is stored in memory location 8. As shown in the top labeled T₀ of FIG. 6B, the start (i.e., current start in FIG. 2E), the next start, the gap (i.e., current gap in FIG. 2E), reflect the first memory location, second memory location, fourth memory location, and third memory location, respectively, of the memory location translation data associated with the physical memory region including memory locations 1-4.

At time T₁ shown in row three of FIG. 6A, a migration cycle is partially completed in that the physical memory region including memory locations 5-8, referred to as the second physical memory location throughout the remainder of this example, has been migrated while the physical memory region, referred to as the first physical memory region throughout the remainder of this example, including memory locations 1-4 has not been migrated at T₁. The migration cycle transposed the memory locations 7 and 8 resulting in data fragment F and the gap of the second physical memory region exchanging memory locations.

At time T₂ shown in row four of FIG. 6A, a migration cycle of both the first and second physical memory region has been completed. The migration cycle of the first physical memory region transposed memory locations 3 and 4 resulting in data fragment C and the gap of the first physical memory region exchanging memory locations. Additionally, the gap (e.g., current gap of FIG. 2E) and next gap shown in FIG. 6B were updated to reflect that the gap is now located in memory location 3 and the next gap is located in memory location 2.

Returning to FIG. 6A, at time T₃ shown in row five a second migration cycle is partially completed in that the second physical memory region has been migrated while the first physical memory region has not been migrated at T₃. The migration cycle transposed memory locations 7 and 8 resulting in data fragment E and the gap of the second physical memory region exchanging memory locations.

At time T₄ shown in row six, the second migration cycle of both the first and second physical memory regions has been completed. The migration cycle of the first physical memory region transposed memory locations 2 and 3 resulting in data fragment B and the gap of the first physical memory region exchanging memory locations. Additionally, the gap and next gap shown in FIG. 6B were updated to reflect that the gap is now located in memory location 2 and the next gap is located in memory location 1.

Returning to FIG. 6A, at time T₅ shown in row six a third migration cycle is partially completed in that the second physical memory region has been migrated while the first physical memory region has not been migrated at T₅. The migration cycle transposed memory locations 5 and 6 resulting in data fragment D and the gap of the second physical memory region exchanging memory locations.

At time T₆ shown in row seven, the second migration cycle of both the first and second physical memory regions has been completed. The migration cycle of the first physical memory region transposed the memory locations 1 and 2 resulting in data fragment A and the gap of the first physical memory region exchanging memory locations. Additionally, the gap and next gap shown in FIG. 6B were updated to reflect that the gap is now located in memory location 1 and the next gap is memory location 4. Similarly, start (e.g., current start of Fig. 2E) and next start have been updated to reflect that the start is now location in memory location 2 and the next start is located in memory location 3.

Returning to FIG. 6A, at time T₇ shown in row seven a fourth migration cycle is partially completed in that the second physical memory region has been migrated while the first physical memory region has not been migrated at T₇. The migration cycle transposed the memory locations 8 and 5 resulting in data fragment F and the gap of the second physical memory region exchanging memory locations.

At time T₈ shown in row eight, the fourth migration cycle of both the first and second physical memory regions has been completed. The migration cycle of the first physical memory region transposed the memory locations 4 and 1 resulting in data fragment C and the gap of the first physical memory region exchanging memory locations. Additionally, the gap and next gap shown in FIG. 6B were updated to reflect that the gap is now located in memory location 4 and the next gap is located in memory location 3.

The example use case ends following Time T₈.

Embodiments of the technology may enable solid state storage systems to mitigate the effects of repeated writing to solid state memory of the solid state storage system that would otherwise, over time, result in failure of the solid state memory. In a system in accordance with one or more embodiments of the technology, wear leveling is used to reduce the effect of frequently written data fragments on individual memory locations. To facilitate wear leveling and mitigate overhead associated with wear leveling, the storage capacity of a solid state storage may be divided into an arbitrary number of physical storage regions. Each of the physical storage regions may include the same number of memory locations. In other words, each of the physical storage region may include the same number of bytes of storage capacity.

When performing wear leveling, data associated with each of the physical memory regions to enable the data as originally-stored to be recovered after the data has been migrated with the physical storage region. Additionally, data associated with all of the physical storage regions that indicates a portion of the physical storage regions that have not yet been migrated as part of a migration cycle. Storing the aforementioned information on a region and aggregate region level may dramatically reduce the amount of storage used to translate logical to physical memory regions when compared to using a direct mapping of logical memory locations to logical memory regions.

For example, the data associated with a single physical memory region may include 10 bytes of information and the data associated with all of the physical memory regions may include 2 bytes. Thus, 12 bytes of data may be used to derive all of the mappings between the logical memory region and the physical memory region. In contrast, a direct mapping between the aforementioned logical and physical regions may be an order of magnitude of more larger.

In further embodiments of the technology, the data stored in physical memory regions may be swapped with the data stored in other physical memory regions to level the wear across a macro region. Swapping may be triggered by read/write cycles performed of the respective physical memory regions. For example, high write rate regions may be identified and the data stored in the high write rate regions may be swapped with data stored in low write rate regions. After the data is swapped, the logical to physical memory region mappings may be updated to reflect the swap. The updating may include swapping the memory location translation data (e.g., 230, FIG. 2E) associated with the regions.

Embodiments of the technology may address wear level of solid state storage devices that have limited write cycles. The embodiments may provide a wear leveling method that distributes read/writes across a physical memory regions of the solid state storage devices while limiting computing resource overhead incurred by the wear leveling.

One or more embodiments of the technology may be implemented using instructions executed by one or more processors of the data management device. Further, such instructions may correspond to computer readable instructions that are stored on one or more non-transitory computer readable mediums.

While the technology has been described with respect to a limited number of embodiments, those skilled in the art, having benefit of this disclosure, will appreciate that other embodiments can be devised which do not depart from the scope of the technology as disclosed herein. Accordingly, the scope of the technology should be limited only by the attached claims.

## Claims

1. A data storage device, comprising:
a persistent storage that stores data; and
a processor programmed to:
obtain a data access request for the data stored in the persistent storage;
obtain a portion of the data from the persistent storage using a global migration progress index; and
provide the obtained portion of the data in response to the data access request.

2. The data storage device of claim 1, wherein the persistent storage comprises:
a plurality of physical memory regions, wherein each physical memory region of the plurality of physical memory regions comprises a plurality of memory locations,
wherein a memory location of the plurality of memory locations of each physical memory region comprises a gap.

3. The data storage device of claim 2, wherein the gap is an unused memory location.

4. The data storage device of claim 1, wherein the persistent storage comprises:
a plurality of physical memory regions,
wherein each physical memory region of the plurality of physical memory regions comprises a same number of bytes as each other physical memory region of the plurality of physical memory regions.

5. The data storage device of claim 1, 2, 3 or 4 wherein the data is stored on a solid state storage of the persistent storage,
wherein the processor is further programmed to:
wear level the solid state storage; and
after wear leveling the solid state storage:
obtain a second data access request for the data stored in the persistent storage;
obtain the portion of the data from the persistent storage using an updated global migration progress index; and
provide the obtained portion in response to the second data access request.

6. The data storage device of claim 5, wherein wear leveling the solid state storage comprises:
migrating a gap stored in a memory location of a physical memory region of the solid state storage to a second memory location of the physical memory region; and
update the global migration progress index to specify that the physical memory region of the solid state storage has been wear leveled.

7. The data storage device of claim 6, wherein wear leveling the solid state storage further comprises:
migrating a second gap stored in a memory location of a second physical memory region of the solid state storage to a second memory location of the second physical memory region; and
update the global migration progress index to specify that the physical memory region and the second physical memory region of the solid state storage has been wear leveled.

8. The data storage device of claim 6 or 7, wherein wear leveling the solid state storage further comprises:
after migrating the gap, updating a logical address to physical address mapping based on a relative location of the gap within the physical memory region.

9. The data storage device of claim 8, wherein the logical address to physical address mapping comprises:
a base address that specifies a location of the physical memory region;
a start location that specifies a memory location of the plurality of memory locations of the physical memory region; and
a gap location that specifies a memory location of the plurality of memory locations of the physical memory region in which the gap is located.

10. The data storage device of claim 1, wherein the global migration progress index indicates a first portion of a plurality of physical memory regions that have completed a wear leveling cycle and a second portion of the plurality of physical memory regions that have not completed the wear leveling cycle.

11. The data storage device of claim 10, wherein the wear leveling cycle transposes data stored in two memory locations of each physical memory region of the plurality of physical memory regions.

12. The data storage device of claim 11, wherein a memory location of the two memory locations stores a gap.

13. The data storage device of claim 11, wherein the two memory locations of each physical memory region of the plurality of physical memory regions are at a same location relative to a start of each physical memory region of the plurality of physical memory regions during each wear leveling cycle.

14. The data storage device of claim 1, wherein the portion of the data from the persistent storage is obtained while wear leveling a solid state storage of the persistent storage that stores the portion of the data.

15. The data storage device of claim 14, wherein the migration progress index indicates a portion of physical memory regions of the solid state storage that have not been wear leveled as part of a wear leveling cycle of the wear leveling performed while the portion of the data is obtained from the solid state storage.

16. The data storage device of claim 14, wherein the portion of the data is obtained from the persistent storage by:
reading a physical memory region storing a data migrated portion of the data; and
rearranging the data migrated portion of the data based on the migration progress index to obtain the portion of the of the data.

17. A method for operating a data storage device, the method comprising:
obtaining a data access request for the data stored in the persistent storage;
obtaining a portion of the data from the persistent storage using a global migration progress index; and
providing the obtained portion of the data in response to the data access request.

18. A non-transitory computer readable storage medium storing instructions, the instructions when executed by a processor cause the processor to perform a method of operating a data storage device, the method comprising:
obtaining a data access request for the data stored in the persistent storage;
obtaining a portion of the data from the persistent storage using a global migration progress index; and
providing the obtained portion of the data in response to the data access request.
